# EUROPÄISCHE PATENTANMELDUNG

(11) **EP 4 083 585 A1**
(43) Veröffentlichungstag der Anmeldung: **02.11.2022**
(21) Anmeldenummer: 21171476.1
(22) Anmeldetag: 30.04.2021
(51) Int. Cl.: G01G 19/52, G04G 21/02

(54) **ARMBANDUHR MIT INTEGRIERTER WAAGE**

(71) Anmelder: Imbimbo, Marco, 8153 Rümlang (CH)
(72) Erfinder: Imbimbo, Marco, 8153 Rümlang (CH)
(74) Vertreter: E. Blum & Co. AG

(57) **Zusammenfassung**

Eine Armbanduhr umfasst eine Uhrvorrichtung (1) mit einer Zeitanzeige (11) und ein an der Uhrvorrichtung (1) befestigtes Armband (2). Die Uhrvorrichtung (1) weist eine Waage (12) mit einer Wiegefläche (14) auf.

## Beschreibung

### Gebiet der Erfindung

Die Erfindung betrifft eine Armbanduhr mit einer Uhrvorrichtung. Die Uhrvorrichtung umfasst eine Zeitanzeige zum Anzeigen der Uhrzeit. An der Uhrvorrichtung ist ein Armband montiert, mit welchem die Uhrvorrichtung an einem Arm eines Menschen befestigt werden kann.

### Hintergrund

Eine Waage ist ein Messgerät zur Bestimmung einer Masse. Es gibt Waagen in verschiedenen Grössen und mit unterschiedlichen Genauigkeiten.

Bezüglich der Grösse sind dem Fachmann sehr kleine Waagen bekannt, welche Wiegeflächen von wenigen Quadratzentimeter aufweisen. Genannt werden solche Waagen z.B. Mini-Waagen oder Taschenwaagen. Sie dienen zum Messen des Gewichts kleinster Gegenstände, beispielsweise von kleinen Steinen, Gewürzen oder ähnlichem.

Bezüglich der Messgenauigkeit sind beispielsweise Mini-Waagen bzw. Taschenwaagen bekannt, welche mit einer Auflösung von 0.1 - 0.001 g das Gewicht anzeigen. Solche Waagen werden als Feinwaagen bezeichnet. Sie werden beispielsweise von Juwelieren zum Wiegen von Edelsteinen, von Zahnärzten zum Wiegen von Zahngold, von Gastronomen zum Wiegen von Trüffel oder Kaviar eingesetzt.

Der Vorteil einer Taschenwaage ist, dass diese in einer Hosentasche Platz findet und deshalb einfach transportiert bzw. mitgeführt werden kann.

### Darstellung der Erfindung

Es stellt sich die Aufgabe, eine Wiegevorrichtung bereitzustellen, welche von einem Menschen in einfacher Weise mitgeführt werden kann.

Diese Aufgabe wird durch den Gegenstand des unabhängigen Anspruchs gelöst. Demgemäss umfasst eine Armbanduhr eine Uhrvorrichtung mit einer Zeitanzeige und ein an der Uhrvorrichtung befestigtes Armband. Die Uhrvorrichtung weist eine Waage mit einer Wiegefläche auf.

Unter einer Wiegefläche ist eine Fläche zu verstehen, auf welche der zu wiegende Gegenstand gelegt werden kann, um dessen Gewicht zu messen. Damit unterscheidet sich die vorliegende Waage von einer Zugwaage, beispielsweise einer Kofferwaage, bei welcher das Gewicht aufgrund einer durch den zu wiegenden Gegenstand ausgelösten Zugkraft gewogen wird. Bei einer Kofferwage wird das zu wiegende Gut nicht auf einer Wiegefläche platziert, sondern beispielsweise an einem Haken aufgehängt.

Die erfindungsgemässe Armbanduhr hat den Vorteil, dass die in der Armbanduhr integrierte Waage vom Benutzer einfach mitzuführen ist. Eine Armbanduhr ist am Arm des Benutzers stets montiert, sodass die Waage nicht unabsichtlich verlegt wird oder verloren geht. Mit anderen Worten hat ein die Armbanduhr tragender Benutzer die Waage immer dabei.

Die Wiegefläche einer Armbanduhr bietet genügend Fläche um beispielsweise Gegenstände in einem Labor, einer Küche oder in einem Verkaufsladen zu wiegen. Beispielsweise können Gewürze, Trüffel, Kaviar oder Edelsteine gewogen werden.

Insbesondere ist die Waage derart ausgestaltet, dass das Gewicht anhand von durch Gewichtskraft auf die Wiegefläche ausgelösten Druck gemessen wird und nicht wie bei einer Kofferwaage durch Zugkraft.

Mit Vorteil umfasst die Uhrvorrichtung einen öffenbaren Deckel, insbesondere wobei der Deckel aufklappbar ist. Insbesondere ist der Deckel durch Drücken eines Knopfs aufklappbar und/oder der Deckel ist von der Uhrvorrichtung trenn- und befestigbar.

Im Weiteren kann der Deckel im geschlossenen Zustand die Wiegefläche verdecken. In diesem Fall kann die Zeitanzeige auf einer Aussenseite des Deckels angeordnet sein.

Bei dieser Anordnung scheint die Armbanduhr auf den ersten Blick eine gewöhnliche Armbanduhr zu sein. Erst nach dem Öffnen des Deckels, entpuppt sich die Armbanduhr als eine Vorrichtung mit Wiegefunktion. Die Waage ist diskret verborgen. Im Weiteren bietet der Deckel den Vorteil, dass die empfindlichen technischen Bauteile der Waage vor Schmutz und anderen äusseren Einflüssen gut geschützt sind.

Insbesondere wird die Waage durch Öffnen des Deckels aktiviert. Dadurch verbraucht die Waage nur Energie, wenn sie tatsächlich im Einsatz steht.

In einer alternativen Ausführungsform ist die Wiegefläche auf einer Innenseite oder Aussenseite des Deckels angeordnet. Dabei kann der Deckel im geschlossenen Zustand die Zeitanzeige verdecken.

Diese Ausführungsform ist im Vergleich zur vorherigen Ausführungsform genau umgekehrt ausgestaltet. Nicht die Waage wird durch den Deckel verdeckt, sondern die Zeitanzeige.

Bei einer weiteren möglichen Ausführungsform können die Zeitanzeige auf einer ersten Seite der Uhrvorrichtung und die Wiegefläche auf einer der ersten Seite gegenüberliegenden zweiten Seite angeordnet sein. Dabei kann auf einen Deckel verzichtet werden. Die Zeitanzeige ist beispielsweise auf der ersten Seite der Uhrvorrichtung angeordnet, welcher derjenigen Seite entspricht, welche beim Tragen der Armbanduhr am Handgelenk sichtbar ist. Auf der gegenüberliegenden Seite, nämlich auf derjenigen Seite, welche gegen die Oberfläche des Handgelenks gerichtet und verdeckt ist, ist die Waage angeordnet. D.h. auf den ersten Blick scheint die Armbanduhr eine gewöhnliche Armbanduhr zu sein. Demontiert der Benutzer die Armbanduhr jedoch von seinem Handgelenk, so kann er die Armbanduhr umgekehrt und mit der Wiegefläche nach oben auf einen Tisch stellen und die Armbanduhr als Waage verwenden.

Insbesondere ist durch Drücken eines Knopfes die Waage aktivierbar und/oder deaktivierbar. Damit verbraucht die Waage nur Energie, wenn der Benutzer diese aktiviert. Nach erfolgter Benutzung der Waage kann der Benutzer die Waage durch drücken des Knopfes wieder deaktivieren.

In einer besonderen Ausführungsform umfasst die Armbanduhr eine Wiegeerweiterungsfläche, welche die Wiegefläche vergrössert. Dabei ist die Wiegeerweiterungsfläche mit der Uhrvorrichtung koppelbar und von dieser entkoppelbar. Die Wiegeerweiterungsfläche ist vorgesehen, falls die Wiegefläche der Uhrvorrichtung nicht genügend Fläche bietet, um das zu wiegende Gut zu platzieren. Beispielsweise kann als Wiegeerweiterungsfläche ein Trichter dienen, welcher auf der Wiegefläche montiert wird. Dadurch kann beispielsweise eine grössere Menge von Gewürzen in den Trichter gefüllt und sodann gewogen werden. Die Armbanduhr ist dadurch auch für etwas grössere Gegenstände als Waage nutzbar. Die Wiegeerweiterungsfläche kann aber auch als einfache, ebene Platte ausgestaltet sein.

Insbesondere weist die Armbanduhr eine Gewichtsanzeige auf, welche das von der Waage gemessene Gewicht anzeigt. Diese Gewichtsanzeige kann am Armband angeordnet sein. Damit steht eine möglichst grosse Wiegefläche auf der Uhrvorrichtung zur Verfügung.

Die Gewichtsanzeige kann aber auch am Deckel, insbesondere an einer Aussenseite des Deckels oder an einer Innenseite des Deckels angeordnet sein.

Die Gewichtsanzeige kann auch in der Zeitanzeige integriert sein. Ist die Anzeige beispielsweise als Digitalanzeige ausgestaltet, so kann je nach Verwendung der Armbanduhr zwischen der Gewichtsanzeige und der Zeitanzeige umschalten. Dies führt zu einer noch kompakteren Ausgestaltung der Armbanduhr.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1a eine erste Ausführungsform einer Armbanduhr;
Fig. 1b die erste Ausführungsform mit Blick von der Seite;
Fig. 1c die erste Ausführungsform mit geöffnetem Deckel;
Fig. 1d die erste Ausführungsform mit Blick auf die Wiegefläche,
Fig. 2 eine Armbanduhr mit einer Wiegeerweiterungsfläche;
Fig. 3 eine Armbanduhr mit einer alternativen Wiegeerweiterungsfläche;
Fig. 4a eine zweite Ausführungsform einer Armbanduhr;
Fig. 4b die zweite Ausführungsform bei geöffnetem Deckel;
Fig. 5a zeigt eine dritte Ausführungsform; und
Fig. 5b zeigt die dritte Ausführungsform in umgekehrter Anordnung.

### Wege zur Ausführung der Erfindung

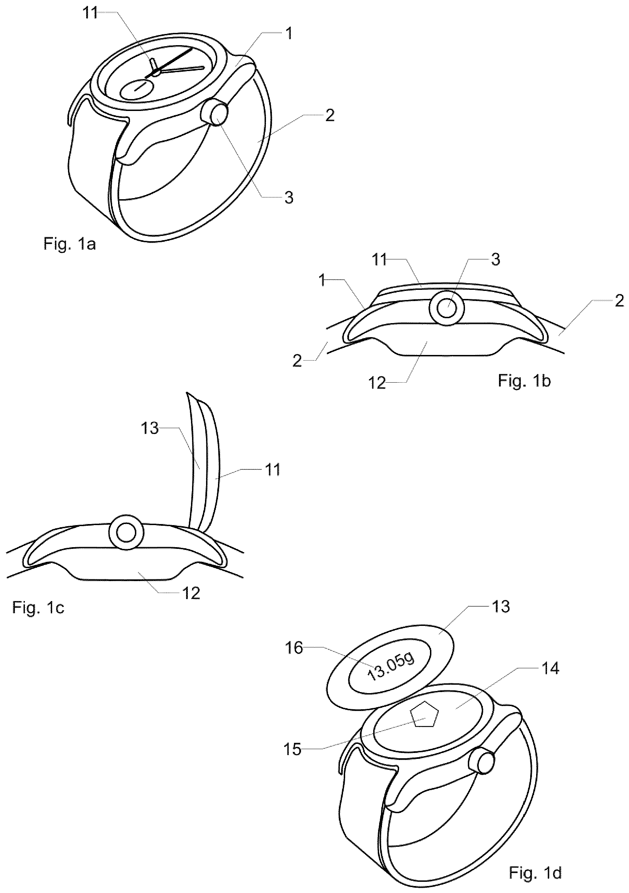

Fig. 1a zeigt eine erfinderische Armbanduhr. Diese umfasst eine Uhrvorrichtung 1, d.h. eine Vorrichtung mit einer Zeitanzeige 11. Vorliegend ist eine analoge Zeitanzeige vorhanden. An der Uhrvorrichtung 1 ist ein Armband 2 befestigt. Dieses ist durchgehend und einstückig ausgestaltet. Das Armband ist aus Kunststoff und derart elastisch, dass es über unterschiedlich dicke Handgelenke gezogen werden kann. Das Armband könnte natürlich auch aus einem anderen Material, beispielsweise aus Leder oder Metall, gefertigt sein. Seitlich an der Uhrvorrichtung list ein Knopf 3 angeordnet. Knopf 3 kann gedrückt und gedreht werden.

Die gezeigte Armbanduhr umfasst eine Waage mit einer Wiegefläche. Auf die Wiegefläche kann ein Gegenstand platziert werden, dessen Gewicht von der Waage gemessen wird. Bei Betrachtung der Armbanduhr gemäss Fig. 1a ist auf den ersten Blick für den Benutzer nicht erkennbar, dass die Uhrvorrichtung 1 eine Waage umfasst. Die Armbanduhr sieht aus wie eine gewöhnliche Armbanduhr und die Waage ist diskret im Inneren der Uhrvorrichtung 1 versteckt.

Fig. 1b zeigt eine Seitenansicht der Armbanduhr. Mit denselben Bezugsziffern markiert sind die Uhrvorrichtung 1 und das Armband 2. Die Uhrvorrichtung 1 ist etwas dicker ausgestaltet wie eine übliche Armbanduhr. Dies weil die Waage im Gehäuse der Uhrvorrichtung 1 untergebracht ist. Die Elektronik und die Wiegefläche der Waage benötigen entsprechenden Bauraum. Wie in der Fig. 1a gut sichtbar, befindet sich die Zeitanzeige 11 an der Aussenseite der Uhrvorrichtung 1. Die Waage, gekennzeichnet mit der Bezugsziffer 12, ist im unteren Teil der Uhrvorrichtung 1 angeordnet. Waage 12 und Zeitanzeige 11 werden durch eine gemeinsame Batterie angetrieben.

In der gezeigten ersten Ausführungsform ist die Zeitanzeige 11 in einen Deckel 13 der Uhrvorrichtung 1 integriert, d.h. die Zeitanzeige 11 ist an der Aussenseite des Deckels 13 angeordnet. Der Deckel 13 kann geöffnet und geschlossen werden. Geöffnet wird der Deckel 13 durch drücken des Knopfes 3. Geschlossen wird der Deckel 13, indem der Deckel 13 zugedrückt und eingerastet wird. Die Fig. 1a und 1b zeigen den Deckel 13 in geschlossener Stellung, die Fig. 1c und 1d zeigen den Deckel 13 in geöffneter Stellung.

Ist der Deckel 13 geöffnet, so kommt die Waage 12 zum Vorschein. Die Waage 12 umfasst eine Wiegefläche 14, auf welche der zu wiegende Gegenstand 15, beispielsweise ein kleiner Stein, zum Wiegen platziert werden kann. Das gemessene Gewicht wird mittels einer an der Innenseite des Deckels 13 angeordneten Gewichtsanzeige 16 angezeigt. Es handelt sich um eine digitale Gewichtsanzeige. Die Gewichtsanzeige könnte alternativ auch an der Aussenseite des Deckels 13 angeordnet sein. D.h. die Gewichtsanzeige wäre in diesem Fall in die Zeitanzeige integriert. Die Gewichtsanzeige 16 bzw. die Waage 12 kann durch Drücken des Knopfes 3 aktiviert und deaktiviert werden. Alternativ wird die Gewichtsanzeige 16 bzw. die Waage 12 durch Öffnen und Schliessen des Deckels 13 aktiviert und deaktiviert.

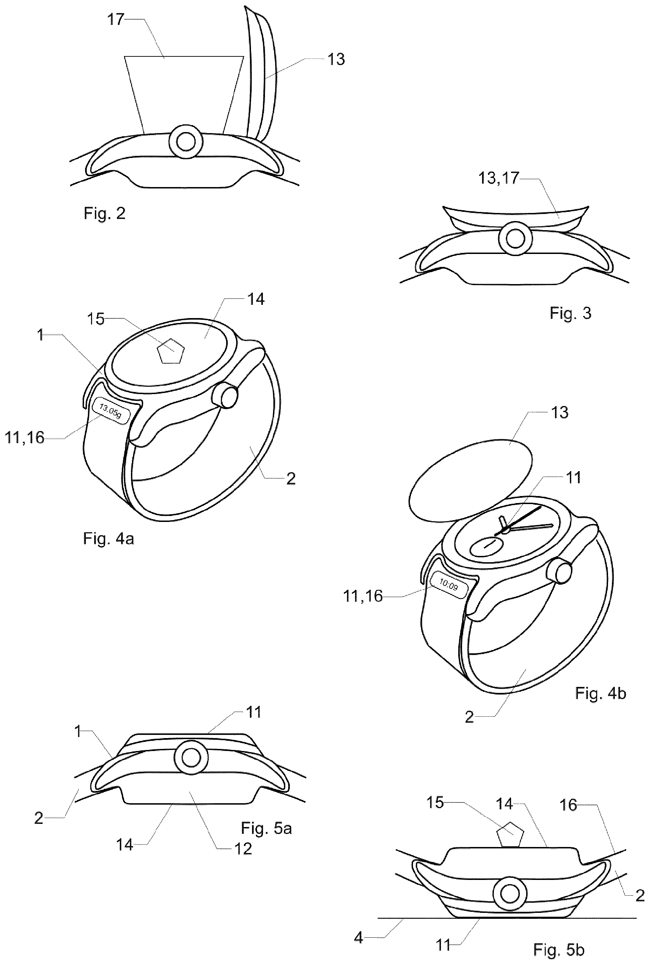

Die Fig. 2 zeigt die erste Ausführungsform mit geöffnetem Deckel 13 und einer auf der Wiegefläche 14 angeordneten Wiegeerweiterungsfläche 17. Die Wiegeerweiterungsfläche 17 ist als Trichter ausgestaltet. Diese ermöglicht es, beispielsweise eine grössere Menge eines pulverförmigen Gegenstandes mittels der Waage 12 zu messen. Die Wiegeerweiterungsfläche 17 kann vom Benutzer je nach Bedarf mit der Uhrvorrichtung 1 gekoppelt und entkoppelt werden.

Bei der in Fig. 3 gezeigten Ausführungsform ist es möglich, den Deckel 13 nicht nur zu öffnen, sondern ihn mit seiner Aussenfläche auf die Wiegefläche 14 zu platzieren. Dadurch dient der Deckel 13 als eine Wiegeerweiterungsfläche 17.

Die Fig. 4a und 4b zeigen eine zweite Ausführungsform der Erfindung. Ist bei dieser zweiten Ausführungsform der Deckel 13 geschlossen, befindet sich die Wiegefläche 14 auf der Aussenseite der Uhrvorrichtung 1. Die Uhrvorrichtung 1 mit geschlossenem Deckel 13 ist in Fig. 4a gezeigt. Der zu wiegende Gegenstand 15 kann auf die Wiegefläche 14 platziert und das gemessene Gewicht kann an der Gewichtsanzeige 16 abgelesen werden. Die Gewichtsanzeige 16 ist bei der vorliegenden zweiten Ausführungsform am Armband 2 angeordnet.

Fig. 4b zeigt die zweite Ausführungsform mit geöffnetem Deckel 13. Dabei kommt die Zeitanzeige 11 zum Vorschein. Die Zeit wird einerseits mit einer analogen Zeitanzeige 11 angezeigt, welche zentral auf der Uhrvorrichtung 1 angeordnet ist. Andererseits wird die Zeit auch dort angezeigt, wo bei geschlossenem Deckel 13 das Gewicht angezeigt wird. Die Digitalanzeige schaltet beim Öffnen des Deckels von der Gewichtsanzeige auf die Zeitanzeige um, sodass bei geöffnetem Deckel eine Zeitanzeige 11 auch am Armband 2 angeordnet ist.

Die Fig. 5a und 5b zeigen eine dritte Ausführungsform. Bei dieser Ausführungsform gibt es keinen öffenbaren Deckel. An der Oberseite, d.h. auf einer ersten Seite der Uhrvorrichtung 1 befindet sich die Zeitanzeige 11. Auf der gegenüberliegenden Seite, d.h. auf einer zweiten der ersten Seite gegenüberliegenden Seite der Uhrvorrichtung 1 befindet sich die Wiegefläche 14. Wird die Uhr am Handgelenk so getragen, dass die Zeitanzeige 11 sichtbar ist, kann die Waage 12 nicht benutzt werden. Soll das Gewicht eines Gegenstandes gemessen werden, muss der Benutzer die Armbanduhr ausziehen und vorzugsweise auf einer ebenen Fläche, z.B. einem Tisch 4, anordnen. Dies ist in Fig. 5b gezeigt. Die Uhrvorrichtung 1 liegt dann stabil auf der ebenen Fläche, weil die Zeitanzeige 11 eine ebene Aussenfläche aufweist. Der zu wiegende Gegenstand 15 kann auf die Wiegefläche 14 platziert und sein Gewicht kann gemessen werden. Die Gewichtsanzeige 16 kann in diesem Fall auf der Innenseite des Armbandes 2 angeordnet sein.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Armbanduhr, aufweisend
- eine Uhrvorrichtung (1) mit einer Zeitanzeige (11),
- ein an der Uhrvorrichtung (1) befestigtes Armband (2),
**dadurch gekennzeichnet, dass** die Uhrvorrichtung (1) eine Waage (12) mit einer Wiegefläche (14) aufweist.

2. Armbanduhr nach Anspruch 1, wobei die Waage (12) ausgestaltet ist, Gewicht anhand von durch Gewichtskraft auf die Wiegefläche (14) ausgelösten Drucks zu messen.

3. Armbanduhr nach einem der vorangehenden Ansprüche, wobei die Uhrvorrichtung (1) einen öffenbaren Deckel (13) aufweist, insbesondere wobei der Deckel (13) aufklappbar ist.

4. Armbanduhr nach Anspruch 3, wobei der Deckel (13)
- durch Drücken eines Knopfs (3) aufklappbar ist und/oder
- von der Uhrvorrichtung (1) trenn- und befestigbar ist.

5. Armbanduhr nach Anspruch 3 oder 4, wobei der Deckel (13) im geschlossenen Zustand die Wiegefläche (14) verdeckt, insbesondere wobei die Zeitanzeige (11) auf einer Aussenseite des Deckels (13) angeordnet ist und.

6. Armbanduhr nach Anspruch 3 oder 4, wobei die Wiegefläche (14) auf einer Innenseite oder Aussenseite des Deckels (13) angeordnet ist, insbesondere wobei der Deckel (13) im geschlossenen Zustand die Zeitanzeige (11) verdeckt.

7. Armbanduhr nach einem der Ansprüche 1 bis 4, wobei die Zeitanzeige (11) auf einer ersten Seite der Uhrvorrichtung (1) und die Wiegefläche (14) auf einer der ersten Seite gegenüberliegenden zweiten Seite angeordnet sind.

8. Armbanduhr nach einem der vorangehenden Ansprüche, wobei durch Drücken eines Knopfes (3) die Waage (12) aktivierbar und/oder deaktivierbar ist.

9. Armbanduhr nach einem der vorangehenden Ansprüche, aufweisend eine Wiegeerweiterungsfläche (17), welche die Wiegefläche (14) vergrössert.

10. Armbanduhr nach Anspruch 9, wobei die Wiegeerweiterungsfläche (17)
- mit der Uhrvorrichtung (1) koppelbar und von dieser entkoppelbar ist, und/oder
- die Form eines Trichters oder einer ebenen Platte aufweist.

11. Armbanduhr nach Anspruch 3 und Anspruch 9, wobei der Deckel (13) als Wiegeerweiterungsfläche (17) dient.

12. Armbanduhr nach einem der vorangehenden Ansprüche, aufweisend eine Gewichtsanzeige (16), welche das von der Waage (12) gemessene Gewicht anzeigt,
insbesondere wobei die Gewichtsanzeige (16) eine Digitalanzeige ist.

13. Armbanduhr nach Anspruch 12, wobei die Gewichtsanzeige (16) am Armband (2) angeordnet ist.

14. Armbanduhr nach Anspruch 5 und Anspruch 12, wobei die Gewichtsanzeige (16) am Deckel (13), insbesondere an einer Aussenseite des Deckels (13) oder an einer Innenseite des Deckels (13) angeordnet ist.

15. Armbanduhr nach Anspruch 11, wobei die Gewichtsanzeige (16) in die Zeitanzeige (11) integriert ist.
